**Europäisches Patentamt**

**European Patent Office**

**Office européen des brevets**

(19)

(11) Veröffentlichungsnummer: **0 637 120 A1**

## (12) EUROPÄISCHE PATENTANMELDUNG

(21) Anmeldenummer: **94110788.0**

(22) Anmeldetag: **12.07.94**

(51) Int. Cl.[6]: **H02K 53/00**

(30) Priorität: **26.07.93 DE 4325026**

(43) Veröffentlichungstag der Anmeldung:
**01.02.95 Patentblatt 95/05**

(84) Benannte Vertragsstaaten:
**AT BE CH DE FR GB IT LI NL SE**

(71) Anmelder: **Imris, Pavel, Dr.**
**Kamena ul. 28**
**SL-96622 Lutila (SL)**

(72) Erfinder: **Imris, Pavel, Dr.**
**Kamena ul. 28**
**SL-96622 Lutila (SL)**

(74) Vertreter: **Wolf, Günter, Dipl.Ing.**
**Patentanwälte Amthor u. Wolf,**
**An der Mainbrücke 16**
**D-63456 Hanau (DE)**

(54) **Vorrichtung zur Umwandlung von im Magnetfeld gespeicherter Energie in kinetische Energie.**

(57) Die Erfindung betrifft eine Vorrichtung zur Umwandlung von im Magnetfeld gespeicherter Energie in kinetische Energie. Nach der Erfindung ist diese Vorrichtung derart ausgebildet, daß an einem drehbar gelagerten Rad (22), sich radial gegenüberstehend, mindestens zwei nichtmagnetische Halter als Führungen für jeweils mindestens zwei darin verschieblich gelagerte Permanentmagnete (31, 31'; 32, 32') angeordnet sind. Axial beidseitig benachbart zum Rad (22), dieses zum Teil abdeckend, ist je eine Platte (28) aus magnetischem Material angeordnet. In Abhängigkeit von der Polorientierung beider Pole (S, N), nämlich mit gleichnamigen Polen oder ungleichnamigen Polen gegeneinandergerichtet, ist ein kompressibles Druckelement auf den radial weiter außen befindlichen Permanentmagneten (31, 32) wirkend oder zwischen den beiden Permanentmagneten wirkend angeordnet.

FIG. 5

EP 0 637 120 A1

Die Erfindung betrifft eine Vorrichtung zur Umwandlung von im Magnetfeld eines Permanentmagneten gespeicherten Energie in kinetische Energie.

Der diesbezüglich in etwa einschlägige Stand der Technik wird bspw. durch die US-A-3 879 622 und 4 151 431 repräsentiert. Soweit bekannt, ist keiner dieser Permanent-Magnet-Motore in der Lage, tatsächlich nutzbare kinetische Energie zu liefern, d.h., diese patentierten Vorschläge sind Theorie geblieben. Bis jetzt ist auch nicht bekannt, daß man die magnetische Feldstärke im Spalt zwischen zwei Permanentmagneten periodisch wechseln kann. Ferner ist keine Vorrichtung bekannt, welche die im Magnetfeld eines Permanentmagneten gespeicherte Energie in kinetische Energie umwandelt.

Der Erfindung liegt die Aufgabe zugrunde, eine wirksame Vorrichtung zu schaffen, mit der nutzbare kinetische Energie aus im Magnetfeld eines Permanentmagneten gespeicherter Energie und aus potentieller Energie eines im Magnetfeld gehobenen Körpers gewonnen werden kann.

Gelöst ist diese Aufgabe mit einer Vorrichtung gemäß Anspruch 1, d.h. mit den im Kennzeichen angeführten Merkmalen. Dieser Lösung liegt ein einfacher physikalischer Vorgang zugrunde, indem man nämlich die an einer drehbaren Achse verschieblich gelagerten Permanentmagneten in einem bestimmten Abstand zueinander hält und diesen Abstand durch unterschiedliche Permeabilität aufweisende Elemente in der unmittelbaren Umgebung des Rades verändert. Bei Änderung des Abstandes zwischen den Magneten wird die Masse an dem Rad so verlagert, daß an einer Hälfte des Rades ein größeres Drehmoment entsteht als an der anderen Hälfte. Ein so entstehendes Drehmoment ist das Produkt aus wirkender Schwerkraft und dem Abstand der Masse von der Drehachse des Rades. Mit anderen Worten, das resultierende Drehmoment an der einen Hälfte des Rades ist immer größer als an der anderen Hälfte, wodurch mittels des drehenden Rades kinetische Energie erzeugt wird.

In Anwendung des erfindungsgemäßen physikalischen Vorganges wird das Magnetfeld im Spalt zwischen zwei Permanentmagneten nach außen umgeleitet und das Magnetfeld im Spalt dadurch geschwächt. Wenn man nach einem solchen Vorgang die magnetische Feldstärke im Spalt verringert, dann ist es möglich, den Abstand zwischen zwei gleichnamigen Polen von zwei Permanentmagneten ohne Anwendung äußerer Arbeit zu ändern.

Die erfindungsgemäße Vorrichtung, weitere Einzelheiten und vorteilhafte Ausführungsformen werden nachfolgend anhand von Ausführungsbeispielen näher erläutert.

Es zeigt schematisch

Fig. 1    einen rohrförmigen Halter mit zwei Permanentmagneten, die sich gegenseitig abstoßen;

Fig. 2    in Seitenansicht den Halter gemäß Fig. 1 mit den Mittlen zur Veränderung der magnetischen Feldstärken im Spalt zwischen den Magneten;

Fig. 3    die graphische Darstellung des magnetischen Feldes (F) in Abhängigkeit vom Abstand (D) zwischen den Magneten und den Mitteln zur Veränderung der Feldstärke;

Fig. 4    zum Teil im Schnitt und in Seitenansicht zwei Drehelemente, in denen die radiale Verlagerung der Masse erfolgt;

Fig. 5    zum Teil im Schnitt und in Seitenansicht eine konkrete Ausführungsform der Vorrichtung und

Fig. 6    eine andere Ausführungsform der Drehelemente.

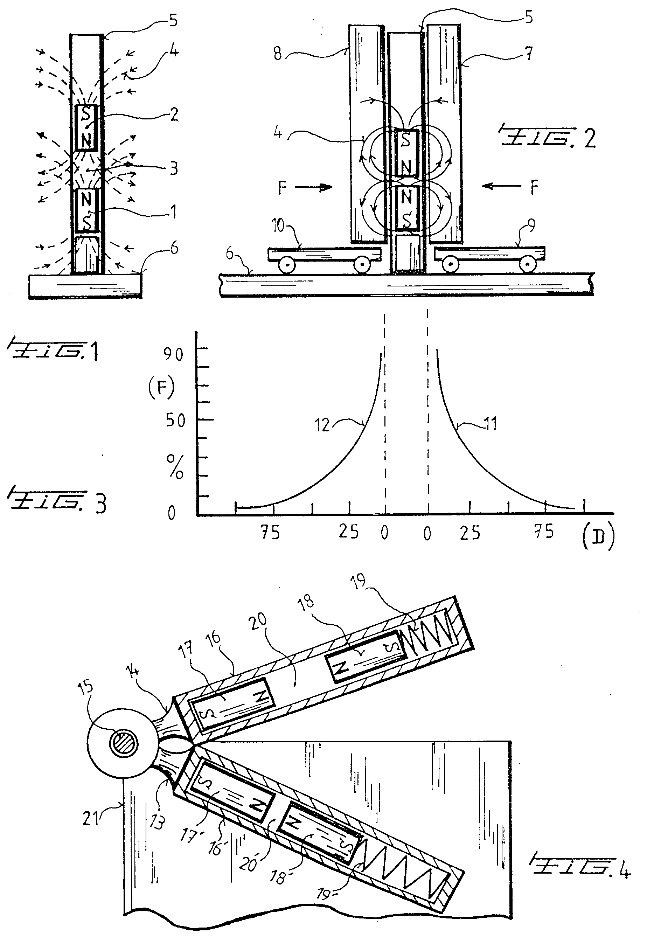

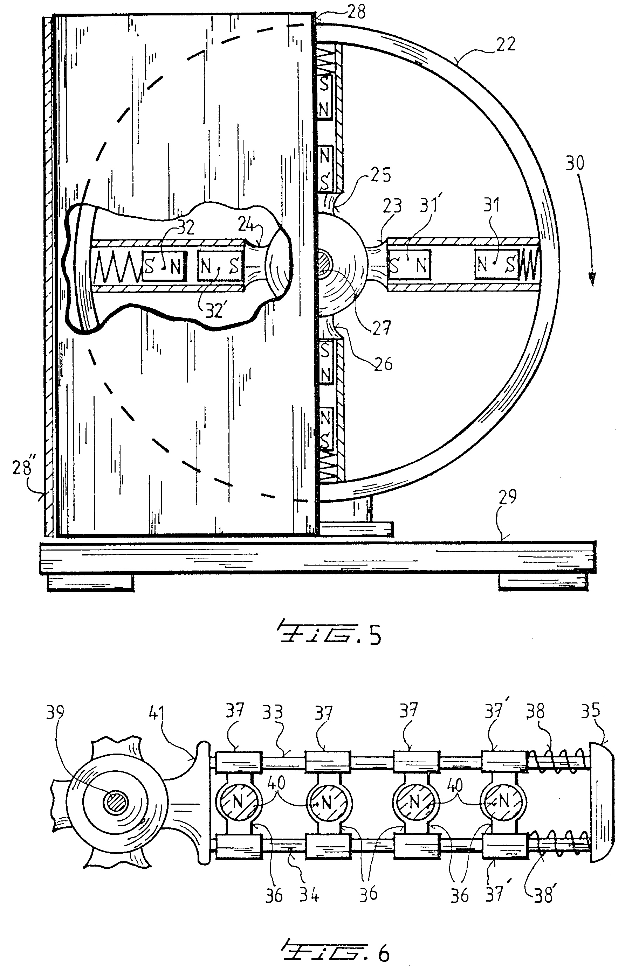

Anhand der Fig. 1 bis 4 wird zunächst das Wesentliche des physikalischen Prinzips erläutert, das der Vorrichtung zugrundeliegt. Zunächst ist in Fig. 1 ein Beispiel dargestellt, bei dem sich zwei gleiche Pole N-N von Permanentmagneten gegenüberstehen, sich also abstoßen. Im vertikalen Halter 5 (bspw. Glasrohr) sind zwei Permanentmagnete 1, 2 übereinander angeordnet, wobei der Magnet 2 über dem Magneten 1 schwebt, weil im Spalt 3 ein magnetisches Feld wirksam ist. Die magnetischen Feldlinien 4 verlaufen gegeneinander und das nicht nur im Spalt 3, sondern auch außerhalb des Spaltes 3. Der Halter 5 ist senkrecht auf einer horizontalen Platte 6 befestigt. Wie groß der Spalt 3 zwischen den Permanentmagneten 1 und 2 zu sein hat, hängt ab vom Gewicht des Magneten 2 und der magnetischen Feldstärke im Spalt 3. Fig. 2 verdeutlicht, wie man die magnetische Feldstärke im Spalt 3 schwächen und dadurch den Spalt 3 zwischen den Magneten 1 und 2 verkleinern kann. Dies geschieht dadurch, daß man bspw. Eisenplatten 7 und 8 in die Nähe des Halters 5 bringt, wofür die Eisenplatten 7, 8 an Verschiebeeinrichtungen 9, 10 befestigt sind. Da hierbei das Magnetfeld 4 auch die Eisenplatten 7, 8 erfaßt, wird die magnetische Feldstärke im Spalt 3 geschwächt. Die Eisenplatten 7, 8 haben eine wesentlich größere Permeabilität als die Luft im Spalt 3, wodurch sich die magnetischen Feldlinien 4 in die Platten 7, 8 schließen. Durch die dadurch erreichte Feldstärkenreduzierung fällt der Permanentmagnet 2 aufgrund seines Gewichtes ab und der Spalt 3 verkleinert sich wesentlich. Bei zunehmender Entfernung der Eisenplatten 7, 8 vom Halter 5 bzw. von den Magneten 1 und 2 nimmt die magnetische Feldstärke im Spalt 3 wieder entsprechend zu und der Magnet 2 steigt wieder nach oben, d.h., das Magnetfeld hat im Spalt 3 Hubarbeit geleistet. Mit anderen Worten, die Masse des Magneten 2 hat potentielle Energie gewonnen.

Bringt man die Eisenplatten 7, 8 wieder dicht an den Halter 5 gemäß Fig. 2 heran, dann fällt der Magnet 2 wieder ab, und durch die fallende Masse wird kinetische Energie gewonnen. Dieser Zyklus der Umwandlung von potentieller Energie in kinetische Energie der Magnetmasse 2 im Schwerefeld kann unendlich oft wiederholt werden. Experimentelle Messungen haben ergeben, daß die magnetische Kraft F für einen bestimmten Abstand D der Platten 7, 8 von den Permanentmagneten 1 und 2 immer gleich und unabhängig davon ist, ob man die Platten 7, 8 von den Magneten 1, 2 entfernt oder zurückführt. Dies bedeutet, daß die Arbeit, die beim Distanzieren der Platten 7, 8 von den Magneten verrichtet werden muß, die gleiche ist, wie die, welche durch die Anziehungskraft F der Magnete 1, 2 in umgekehrter Richtung geleistet wird. Es wurde ferner experimentell festgestellt, daß sich die Verläufe der Kurven 11 und 12 in Fig. 3 für die Hin- und Zurückbewegung der Eisenplatten 7, 8 entsprechen. Fig. 3 zeigt die an den Eisenplatten 7, 8 wirkende magnetische Kraft F in Abhängigkeit vom Abstand D (in Millimetern) der Platten 7, 8 zu den Magneten 1, 2. Die magnetische Kraft F ist in relativen Einheiten gegeben und zwar in Prozenten: Wenn der Spalt 3 zwischen den Permanentmagneten 1, 2 Null ist, beträgt die maximale Feldstärke F, die an den Platten 7, 8 wirksam wird, 100%. Fig. 4 stellt eine konstruktive Umsetzung dieses physikalischen Prinzips dar, mit der die Magnetmassen in radialer Richtung verlagert werden. Hierbei sind zwei Drehelemente 13 und 14 vorgesehen, die um eine Welle 15 drehbar sind. Im Führungsrohr 16 aus nichtferromagnetischem Material sind zwei Permanentmagnete 17, 18 so angeordnet, daß sich gleichnamige Pole gegenüberstehen. Im Raum zwischen dem Magneten 18 und dem Boden des Rohres 16 ist eine Druckfeder 19 eingesetzt, die den Magneten 18 in Richtung Spalt 20 gegen die Wirkung der magnetischen Kraft drückt. Die Pole N-N stoßen sich ab, und die Entfernung zwischen der Welle 15 und dem Permanentmagneten 18 ist entsprechend groß, wobei in der Feder 19 eine bestimmte potentielle Energie gespeichert ist. Das Drehelement 13 ist von zwei Eisenplatten 21, 21' umgeben, wobei in Fig. 4 nur die hintere Eisenplatte 21 dargestellt ist. Bei einer solchen Anordnung wird der magnetische Fluß der Magnete 17', 18' im Rohr 16' durch die Eisenplatte 21, 21' geleitet, weshalb die magnetische Feldstärke im Spalt 20' sehr abgeschwächt ist. Im Endeffekt drückt die Druckfeder 19' den Magneten 18' in den Spalt 20', wodurch der Abstand des Magneten 18' zur Drehachse 15 relativ kleiner wird.

Fig. 5 zeigt ein praktisches Ausführungsbeispiel dieser Vorrichtung, die im Prinzip ein einfaches, um eine Achse 27 drehbares Rad 22 ist, das aus mehreren, gewissermaßen Radspeichen bildende Drehelemente gemäß Fig. 4 besteht, die in Fig. 5 mit 23, 24, 25, 26 bezeichnet sind. Die Eisenplatte 28, in Fig. 5 links vorne dargestellt, ist an einem Gestell 29 befestigt.

Eine entsprechende Eisenplatte (nicht dargestellt) bfindet sich hinter dem Rad 22 und ist ebenfalls am Gestell 29 befestigt. Vorteilhaft ist, um den magnetischen Kreis zwischen den beiden Eisenplatten 28, 28' zu schließen, eine Verbindungswand 28" vorgesehen. Die umhüllenden Eisenplatten 28, 28' sind mit kleinstmöglichem Abstand den Drehelementen 23 bis 26 zugeordnet. Gemäß Fig. 5 umfassen die Eisenplatten 28, 28' nur eine Hälfte des Rades 22. Es ist aber auch möglich, die Eisenplatten 28, 28' das Rad 22 bis zu Zweidrittel umfassen zu lassen. Die Eisenplatten 28, 28' sollten aus Weicheisen bestehen, um die Verluste der Vorrichtung niedrig zu halten. Mit Pfeil 30 ist ein rechtsdrehendes Moment verdeutlicht. Wenn man das Drehelement 23 mit dem Drehelement 24 vergleicht, wird deutlich, daß der Permanentmagnet 31 im Drehelement 23 einen größeren Abstand von der Welle 27 hat als der Permanentmagnet 32, der im Drehelement 24 angeordnet ist. Bekanntlich ergibt sich das Drehmoment aus Kraft mal hebelarm, d.h., das größere Drehmoment befindet sich auf der rechten Seite des Rades 22. Demgemäß dreht sich das Rad 22 im Uhrzeigersinn. Im Beispiel gemäß Fig. 5 sind am Rad 22 vier Drehelemente 23, 24, 25, 26 angeordnet. Von diesen vier Drehelementen weist lediglich das Drehelement 23 im Vergleich zum Drehelement 24 die volle radiale Massenverlagerung auf. Das Drehelement 26 tritt in den Spalt zwischen der Eisenplatte 28 ein und gleichzeitig tritt das Drehelement 25 aus dem Spalt aus. An diesen beiden Drehelementen 25 und 26 wirkt ebenfalls ein magnetisches Feld, wobei das magnetische Feld zwischen dem Drehelement 25 und der Eisenplatte 28 ein linksdrehendes Moment verursacht. Gleichzeitig entsteht am Drehelement 26 ein rechtsdrehendes Moment, d.h., diese Drehmomente, da entgegengesetzt wirkend, kompensieren sich weitgehend gegenseitig und beeinflussen nicht das resultierende Drehmoment des Rades 22. Es liegt auf der Hand, daß man am Rad 22 gemäß Fig. 5 durchaus eine größere Zahl von Drehelementen anbringen kann, um dadurch das resultierende Drehmoment zu vergrößern. Das resultierende Drehmoment wird auch vergrößert, wenn das Gewicht der Permanentmagnete größer ist, und auch die magnetische Feldstärke jedes Permanentmagneten der Vorrichtung vergrößert das resultierende Drehmoment. Das resultierende Drehmoment des Rades 22 ist ein Produkt aus der Masse der Magnete unter Schwerebeschleunigung und aus der unterschiedlichen radialen Position der Massen an den Drehelementen 23 und 24. Die Massen der Magnete verändern ihre Position, wenn die Drehelemente in den Spalt zwischen die Eisenplatte 28, 28' ein- oder aus diesem Spalt austreten.

Eine etwas andere Ausführungsform des Drehelementes ist in Fig. 6 dargestellt. Am Arm 41 sind radial zwei Führungsstangen 33, 34 befestigt, die am anderen Ende mit einem Quersteg 35 verbunden sind. Quer zu den Führungsstangen 33, 34 sind Permanentmagnete 40 durch Halter 36 und Gleitbüchsen 37 an den Führungsstangen verschieblich gelagert. Die Pole N aller Magnete 40 weisen nach der einen und die Pole S nach der anderen Seite (in Fig. 6 nicht sichtbar).

Zwischen dem Quersteg 35 und der äußersten Gleitbüchse 37' sind an beiden Führungsstangen 33, 34 Druckfedern 38, 38' angeordnet. Bei einer solchen Anordnung wirken zwei Kräfte gegeneinander. Die Druckfedern 38, 38' drücken als erste Kraft die Gleitbüchsen 37 mit den Permanentmagenten 40 in Richtung Welle 39 und die zweite Kraft ist die magnetische Feldstärke, die die Permanentmagneten 40 durch gleichartige Pole auseinanderhält. Wenn ein derart ausgebildetes Drehelement in den Spalt zwischen den auch hier vorhandenen, aber nicht dargestellten Eisenplatten 28 eintritt, dann wird die magnetische Feldstärke zwischen den gleichartigen Polen wesentlich herabgesetzt, und die Druckfedern 38, 38' schieben die Magnete 40 in Richtung Welle 39, und die Masse der Permanentmagnete 40, die Masse der Gleitbüchsen 37 und die Masse der Halterungen 36 werden radial verlagert. Wenn das Drehelement den Spalt zwischen den Eisenplatten verläßt, werden die Massen in umgekehrter Richtung verlagert. Der Vorteil des in Fig. 6 dargestellten Drehelementes besteht darin, daß die Permanentmagnete 40 nicht in einem Führungsrohr gemäß Fig. 4 angeordnet sind. Das Rohr 16 beim Ausführungsbeispiel nach Fig. 4 vergrößert nämlich den Abstand zwischen den Magneten 17, 18 und den Eisenplatten 21, 21', was einen geringen Wirkungsgrad zur Folge hat. Die Führungsstangen 33, 34 am Drehelement gemäß Fig. 6 sowie die Gleitbüchsen 37, der Quer steg 35 und die Halterungen 36 bestehen selbstverständlich aus nichtmagnetischem Material.

Unabhängig von den beschriebenen Ausführungsbeispielen können auch folgende Ausführungsformen in Betracht gezogen werden: Die Permanentmagnete an den Drehelementen könnten sich auch mit ungleichartigen Polen gegenüberstehen. Bei einer solchen Anordnung muß sich dann die Druckfeder 19 allerdings im Spalt 20 befinden. Wenn ein solches Drehelement von Eisenplatten, wie vorbeschrieben, zum Teil umfaßt ist, wird der Spalt 20 größer als wenn das Drehelement nur mit Luft umhüllt ist, weil sich ungleichnamige Pole anziehen. Die Druckfeder 19 schiebt dabei die Magnete 17, 18 bei geschwächter magnetischer Feldstärke im Spalt 20 auseinander und das resultierende Drehmoment ist dann ein linksdrehendes.

Außerdem ist es machbar, anstelle von Permanentmagneten mit magnetischem Feld das elektrostatische Feld eines sogenannten Elektrets zu benutzen. Ein Elektret ist ein elektrostatisch permanent polarisierter Stab, der ein permanentes elektrostatisches Feld erzeugt. Durch gleichnamige elektrostatische Polarität stoßen sich solche Elektrete ab und durch ungleichnamige Polarität ziehen sie sich an. Bei solchen Elektreten werden keine Eisenplatten benutzt, sondern Platten aus dielektrischem Material, das eine große dielektrische Konstante aufweist. Bei einer solchen Ausführungsform wird die im elektrostatischen Feld gespeicherte Energie eines Elektreten in kinetische Energie umgewandelt.

Bei den beschriebenen Ausführungsformen ergibt sich der Wirkungsgrad wie folgt:

$$\frac{\text{abgegebene Leistung}}{\text{zuführte Leistung}} \;=\; \eta \;=\; \frac{E_k}{\left[ (m \cdot g \cdot h_{0^\circ}) \;+\; (m \cdot g \cdot h_{180^\circ}) \right] \cdot n}$$

worin

| | |
|---|---|
| $E_k$ | = abgegebene kinetische Energie der Vorrichtung (in J ) |
| $m$ | = Magnetmasse der beweglichen Magnete ( in Kg) |
| $g$ | = Schwerebeschleunigung |
| $h_{0^\circ}$ | = Hubhöhe der Magnetmasse bei 0 ° ( in m ) |
| $h_{180^\circ}$ | = Hubhöhe der Magnetmasse bei 180° ( in m ) |
| $n$ | = Anzahl der beweglichen Magnete am Rad |

**Patentansprüche**

1. Vorrichtung zur Umwandlung von im Magnetfeld gespeicherter Energie in kinetische Energie,
   **dadurch gekennzeichnet,**
   daß an einem drehbar gelagerten Rad (22), sich radial gegenüberstehend, sind mindestens zwei nichtmagnetische Halter als Führungen für jeweils mindestens zwei darin verschieblich gelagerte Permanentmagnete (31, 31', 32, 32') angeordnet;

daß axial beidseitig benachbart zum Rad (22), dieses zum Teil abdeckend, je eine Platte (28) aus magnetischem Material angeordnet ist;

und daß in Abhängigkeit von der Polorientierung beider Pole (S, N), nämlich mit gleichnamigen Polen oder ungleichnamigen Polen gegeneinandergerichtet ein kompressibles Druckelement auf den radial weiter außen befindlichen Permanentmagneten (31, 32) wirkend oder zwischen den beiden Permanentmagneten wirkend angeordnet ist.

2. Vorrichtung nach Anspruch 1,
   **dadurch gekennzeichnet**,
   daß die Platten (28) das Rad zur Hälfte bis maximal zwei Drittel abdeckend bemessen sind.

3. Vorrichtung nach Anspruch 1 oder 2,
   **dadurch gekennzeichnet,**
   daß das Druckelement in Form einer Druckfeder (19) ausgebildet ist.

4. Vorrichtung nach einem der Ansprüche 1 bis 3,
   **dadurch gekennzeichnet,**
   daß die Halter in Form von Rohren (16) ausgebildet sind.

5. Vorrichtung nach einem der Ansprüche 1 bis 3,
   **dadurch gekennzeichnet,**
   daß die Halter in Form von nichtmagnetischen Stangen (33, 34) ausgebildet und an diesen mittels Gleitführungen (37) die Permanentmagnete (40) gelagert sind.

6. Vorrichtung nach Anspruch 5,
   **dadurch gekennzeichnet,**
   daß die Permanentmagnete (40; Fig. 4) in einem Halter parallel zur Drehachse (39) und mit ihren sich entsprechend gleichnamigen Polen jeweils nach der gleichen Seite orientiert angeordnet sind (Fig. 6).

7. Vorrichtung nach einem der Ansprüche 1 bis 6,
   **dadurch gekennzeichnet,**
   daß anstelle der Permanentmagnete (17, 18; 31, 32, 40) an den Haltern Elektrete angeordnet sind und daß die dem Rad (22) benachbart zugeordneten Platten aus dielektrischem Material gebildet sind.

FIG. 1

FIG. 2

FIG. 3

FIG. 4

_Fig_.5

_Fig_.6

**Europäisches Patentamt**

**EUROPÄISCHER RECHERCHENBERICHT**

Nummer der Anmeldung

EP 94 11 0788

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE-A-20 20 544 (G.FREISLER) <br> * Seite 1, Zeile 1 - Zeile 19; Abbildung 1 * <br> --- | 1 | H02K53/00 |
| D,A | US-A-3 879 622 (J.W.ECKLIN) <br> * Abbildungen 3,4 * <br> --- | 1 | |
| A | PATENT ABSTRACTS OF JAPAN <br> vol. 5, no. 76 (M-69) (748) 20. Mai 1981 <br> & JP-A-56 027 083 (TETSUKAZU NAGATA) 16. März 1981 <br> * Zusammenfassung * <br> --- | 1 | |
| A | FR-A-2 543 226 (B.CHARTIER) <br> * Seite 2; Abbildung 3 * <br> --- | 1 | |
| A | DE-A-20 02 070 (W.BENTER) <br> * Seite 3, Zeile 27 - Seite 4, Zeile 26; Abbildung 1 * <br> --- | 1 | |
| A | EP-A-0 152 252 (UNI COM CORP.) <br> * Abbildung 14 * <br> --- | 1 | **RECHERCHIERTE SACHGEBIETE (Int.Cl.6)** |
| D,A | US-A-4 151 431 (H.R.JOHNSON) <br> * Abbildungen 5-7 * <br> --- | 1 | H02K <br> F03G <br> H02N |
| A | PATENT ABSTRACTS OF JAPAN <br> vol. 12, no. 239 (E-630) (3086) 7. Juli 1988 <br> & JP-A-63 028 280 (SEIKO EPSON CORP.) 5. Februar 1988 <br> * Zusammenfassung * <br> ----- | 1,7 | |

Der vorliegende Recherchenbericht wurde für alle Patentansprüche erstellt

| Recherchenort | Abschlußdatum der Recherche | Prüfer |
|---|---|---|
| BERLIN | 7. November 1994 | Leouffre, M |